# EUROPEAN PATENT APPLICATION

(11) **EP 2 851 779 A1**
(43) Date of publication of application: **25.03.2015**
(21) Application number: 14184508.1
(22) Date of filing: 11.09.2014
(51) Int. Cl.: G06F 3/0488, G06F 3/02, G06F 3/041

(54) **Method, device, storage medium and terminal for displaying a virtual keyboard**

(30) Priority: 24.09.2013 CN 201310438148
(71) Applicant: Xiaomi Inc., Beijing 100085 (CN)
(72) Inventor: Ji, Dongfang, Haidian District, (CN); Liu, Daokuan, Haidian District, (CN); Xing, Xinyan, Haidian District, (CN)
(74) Representative: Hanna, Peter William Derek

(57) **Abstract**

The present invention provides a method, a device and a terminal for displaying virtual keyboard. The method includes: receiving a preset triggering signal for triggering the display of the virtual keyboard (102, 201, 301, 401, 501); determining a display region according to a triggering location of the preset triggering signal (104, 402, 202, 502); and displaying the virtual keyboard in the display region (106, 203, 406, 505). The present invention may realize that the virtual keyboard can be displayed in the display region on the touchscreen determined by the triggering signal to allow a user to directly touch the virtual keyboard in the display region without back-and-forth movement, thereby improving the efficiency of inputting information.

## Description

### CROSS-REFERENCE TO RELATED APPLICATIONS

The present application is based on and claims priority to Chinese Patent Application No. 201310438148.9, filed on September 24, 2013.

### TECHNICAL FIELD

The present disclosure generally relates to the field of electronic devices, and more particularly to a method, a device, storage medium and a terminal for displaying a virtual keyboard.

### BACKGROUND

A keyboard is the normal device for inputting information, and has been increasingly upgraded as digital products are upgraded. A virtual keyboard based on a touchscreen has appeared accordingly following the emergence of a touchscreen technology. Compared with operations using a physical keyboard, operations directly applied to a screen are more efficient and convenient and conform to the logic of human-computer interaction. Touchscreen technology is considered as one key technology in the mobile phone industry in the future.

A touch pen or a finger may be used to perform operations during an operation process of the touchscreen. Delicate operations may be realized when a user performs operations using a touch pen, but it needs more operation time. Therefore, more users tend to use their fingers to control a touchscreen. Generally, a virtual keyboard is fixedly displayed in a lower portion of the touchscreen of the terminal so that the user may input information through the virtual keyboard.

In the implementation of the disclosure, the inventors have found the existence of at least the following problem in the related art: the user has to move the fingers thereof to touch the virtual keyboard fixedly displayed in the lower portion of the touchscreen due to limited range of finger movement, whereby it is not convenient to move fingers back and forth, and thus the inputting efficiency is lower.

### SUMMARY

To overcome this problem in related art, the present disclosure provides a method for displaying a virtual keyboard, in accordance with the claims which follow. The solutions are as follows.

According to a first aspect of the embodiments of the present disclosure, there is provided a method for displaying a virtual keyboard, which includes: receiving a preset triggering signal for triggering the display of the virtual keyboard; determining a display region according to a triggering location of the preset triggering signal; and displaying the virtual keyboard in the display region.

Alternatively, the determining a display region according to a triggering location of the preset triggering signal includes: obtaining a preset radius R if the display region is a circular region, and determining the circular region centered at the triggering location of the preset triggering signal according to the preset radius R; or, obtaining a preset major axis R1 and a preset minor axis R2 if the display region is an elliptic region, and determining the elliptic region centered at the triggering location of the preset triggering signal according to the major axis R1 and the minor axis R2.

Alternatively, the displaying of the virtual keyboard in the display region includes: displaying the virtual keyboard in the display region in a preset manner which includes uniformly arranging respective buttons of the virtual keyboard in the display region in a ring pattern or uniformly arranging respective buttons of the virtual keyboard in the display region in a tile pattern.

Alternatively, if there are two display regions, the displaying the virtual keyboard in the display region includes: displaying a part of the virtual keyboard in one of the two display regions in a preset manner and the other part of the virtual keyboard on the other display region in the preset manner, wherein the preset manner includes uniformly arranging respective buttons of the virtual keyboard in the display region in a ring pattern or uniformly arranging respective buttons of the virtual keyboard in the display region in a tile pattern.

Alternatively, the method further includes: detecting whether the display region is out of a screen display range; moving the triggering location of the preset triggering signal in a vector manner if the detection result shows that the display region is out of the screen display range; and re-determining the display region according to the triggering location moved in the vector manner, the re-determined display region being within the screen display range.

Alternatively, the method further includes: detecting whether the display region is out of a screen display range; and re-determining a part of the determined display region which is within the screen display range as the display region if the detection result shows that the display region is out of the screen display range.

Alternatively, the method further includes: receiving a drag signal applied to the virtual keyboard; and re-displaying the virtual keyboard according to the drag signal.

According to a second aspect of embodiments of the present disclosure, there is provided a device for displaying a virtual keyboard, including: a first receiving module configured to receive a preset triggering signal for triggering a virtual keyboard; a first determination module configured to determine a display region according to a triggering location of the preset triggering signal; and a first display module configured to display the virtual keyboard in the display region.

Alternatively, the first determination module includes: a first determination sub-module configured to obtain a preset radius R if the display region is a circular region, and to determine the circular region centered at the triggering location of the preset triggering signal according to the preset radius R; and a second determination sub-module configured to obtain a preset major axis R1 and a preset minor axis R2 if the display region is an elliptic region, and to determine the elliptic region centered at the triggering location of the preset triggering signal according to the major axis R1 and the minor axis R2.

Alternatively, the first display module is configured to display the virtual keyboard in the display region in a preset manner, wherein the preset manner includes uniformly arranging respective buttons of the virtual keyboard in the display region in a ring pattern or uniformly arranging respective buttons of the virtual keyboard in the display region in a tile pattern.

Alternatively, if there are two display regions, the first display module is configured to display a part of the virtual keyboard in a display region in a preset manner and to display the other part of the virtual keyboard in the other of the two display regions in the preset manner, wherein the preset manner includes uniformly arranging respective buttons of the virtual keyboard in the display region in a ring pattern or uniformly arranging respective buttons of the virtual keyboard in the display region in a tile pattern.

Alternatively, the device further includes: a range detection module configured to detect whether the display region is out of a screen display range; a location movement module configured to move, in vector manner, the triggering location of the preset triggering signal if the detection result shows that the display region is out of the screen display range; and a second determination module configured to re-determine the display region according to the triggering location moved in vector manner, the re-determined display region being within the screen display region.

Alternatively, the device further includes: a range detection module configured to detect whether the display region is out of a screen display range; and a third determination module configured to re-determine a part of the determined display region which is within the screen display region as the display region, if the detection result shows that the display region is out of the screen display range.

Alternatively, the device further includes: a second receiving module configured to receive a drag signal applied to the virtual keyboard; and a second display module configured to re-display the virtual keyboard according to the drag signal.

According to a third aspect of embodiments of the present disclosure, there is provided a terminal including: one or more processors; a memory; and one or more modules stored in the memory and configured to be executed by the one or more processors, and having the following functions of: receiving a preset triggering signal for triggering the display of the virtual keyboard; determining a display region according to a triggering location of the triggering signal; and displaying the virtual keyboard in the display region.

Alternatively, the one or more modules further have the following functions of: obtaining a preset radius R if the display region is a circular region, and determining the circular region centered at the triggering location of the preset triggering signal according to the preset radius R; or, obtaining a preset major axis R1 and a preset minor axis R2 if the display region is an elliptic region, and determining the elliptic region centered at the triggering location of the preset triggering signal according to the major axis R1 and the minor axis R2.

Alternatively, the one or more modules further have the following functions of: displaying the virtual keyboard in the display region in a preset manner, wherein the preset manner includes: uniformly arranging respective buttons of the virtual keyboard in the display region in a ring pattern; or uniformly arranging respective buttons of the virtual keyboard in the display region in a tile pattern.

Alternatively, the one or more modules further have the following functions of: displaying a part of the virtual keyboard in one of the two display regions in a preset manner and the other part of the virtual keyboard in the other of the two display regions in the preset manner, if there are two display regions, wherein the preset manner includes: uniformly arranging respective buttons of the virtual keyboard in the display region in a ring pattern; or uniformly arranging respective buttons of the virtual keyboard in the display region in a tile pattern.

Alternatively, the one or more modules further have the following functions: detecting whether the display region is out of a screen display range; moving, in a vector manner, the triggering location of the preset triggering signal if the detection result shows that the display region is out of the screen display range; and re-determining the display region according to the triggering location moved in vector manner, the re-determined display region being within the screen display range.

Alternatively, the one or more modules further have the following functions of: detecting whether the display region is out of a screen display range; and re-determining a part of the determined display region which is within the screen display range as the display region if the detection result shows that the display region is out of the screen display range.

Alternatively, the one or more modules further have the following functions of: receiving a drag signal applied to the virtual keyboard; and re-displaying the virtual keyboard according to the drag signal.

According to a third aspect of embodiments of the present disclosure, there is provided a non-transitory readable storage medium including instructions executable by one or more processors in a terminal and for causing one or more processors to: receive a preset triggering signal for triggering the display of the virtual keyboard; determine a display region according to a triggering location of the preset triggering signal; and display the virtual keyboard in the display region.

The solutions according to embodiments of the present disclosure may have the following advantages.

Through receiving the preset triggering signal for triggering a virtual keyboard, determining the display region according to the triggering location of the preset triggering signal, and displaying the virtual keyboard on the touchscreen, it may be solved that the user has to move the fingers thereof to touch the virtual keyboard displayed in the lower portion of the touchscreen due to limited movement range of fingers so as to input information, whereby it is not convenient to move fingers back and forth and thus the inputting efficiency is lower; and it may realized that the virtual keyboard can be displayed in the display region on the touchscreen determined by the triggering signal, and the fingers may directly touch the virtual keyboard in the display region without back-and-forth movement, thereby improving efficiency of inputting information.

### BRIEF DESCRIPTION OF THE DRAWINGS

The accompanying drawings, which are incorporated and constitute a part of this specification, serve to explain, the principles of the present disclosure and they are consistent with the present disclosure. The accompanying drawings will be described briefly.
Fig. 1 is a flowchart showing a method for displaying a virtual keyboard according to an exemplary embodiment;
Fig. 2A is a flowchart showing a method for displaying a virtual keyboard according to an exemplary embodiment;
Fig. 2B is a flowchart showing a method for displaying a virtual keyboard according to an exemplary embodiment;
Fig. 2C is a diagram showing a manner of determining a display region according to an exemplary embodiment;
Fig. 2D is a flowchart showing a method for displaying a virtual keyboard according to an exemplary embodiment;
Fig. 2E is a diagram showing another manner of determining a display region according to an exemplary embodiment;
Fig. 2F is a diagram showing an arrangement of buttons according to an exemplary embodiment;
Fig. 2G is a diagram showing another arrangement of buttons according to an exemplary embodiment;
Fig. 2H is a diagram showing movement of a virtual keyboard according to an exemplary embodiment;
Fig. 3A is a flowchart showing a method for displaying a virtual keyboard according to an exemplary embodiment;
Fig. 3B is a diagram showing a displayed virtual keyboard according to an exemplary embodiment;
Fig. 4A is a flowchart showing a method for displaying a virtual keyboard according to an exemplary embodiment;
Fig. 4B a diagram showing yet another manner of determining a display region according to an exemplary embodiment;
Fig. 5A is a flowchart showing a method for displaying a virtual keyboard according to an exemplary embodiment;
Fig. 5B a diagram showing yet another manner of determining a display region according to an exemplary embodiment;
Fig. 6 is a block diagram illustrating a device for displaying virtual keyboard according to an exemplary embodiment;
Fig. 7 is a block diagram illustrating a device for displaying a virtual keyboard according to an exemplary embodiment; and
Fig. 8 is a block diagram illustrating a terminal according to an exemplary embodiment.

### DETAILED DESCRIPTION

To make the objects, solutions and advantages of the present disclosure clearer, reference will now be made in detail to exemplary embodiments, examples of which are illustrated in the accompanying drawings. The following exemplary embodiments and description thereof are intended to illustrate the present discourse, rather than to limit the present discourse.

The term "terminal" used herein is generally electronic equipment including a touchscreen. It may be, for example, a smart mobile phone, a table PC, a smart television, an eBook reader, a Moving Picture Experts Group Audio Layer III (MP3) player, a Moving Picture Experts Group Audio Layer IV (MP4) player, a portable computer, a desktop computer and the like.

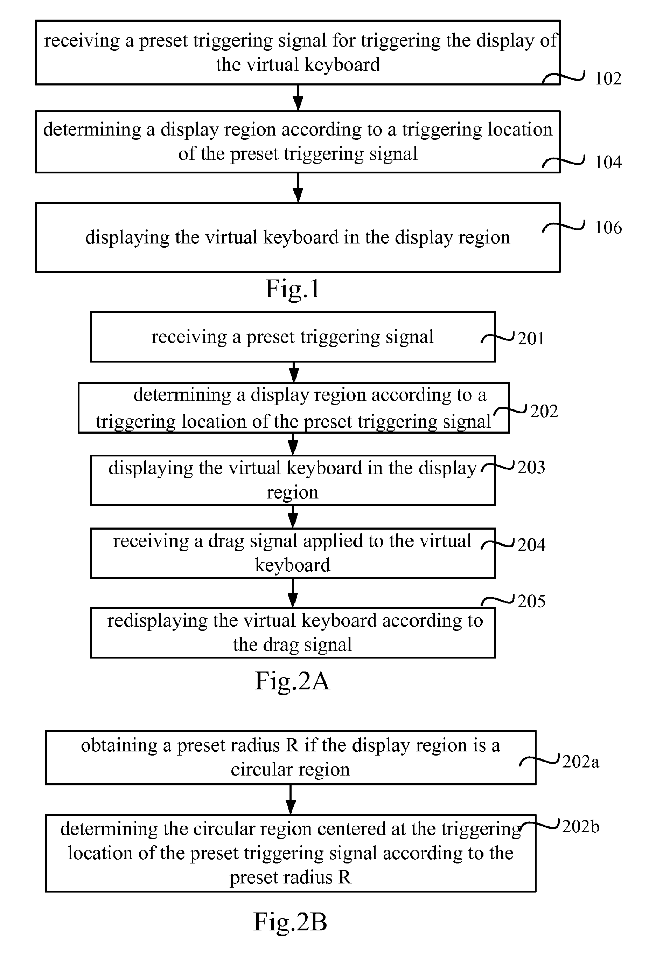

As shown in Fig. 1, it is a flowchart showing a method for displaying a virtual keyboard according to an exemplary embodiment. The embodiment is illustrated by an example that the method for displaying a virtual keyboard is applied to a terminal. The method for displaying a virtual keyboard may include the following steps.

In step 102, a preset triggering signal for triggering a virtual keyboard is received.

In step 104, a display region is determined according to a triggering location of the preset triggering signal.

In step 106, a virtual keyboard is displayed in the display region.

In conclusion, according to the method for displaying a virtual keyboard in the exemplary embodiment, by receiving a preset triggering signal for triggering the virtual keyboard, determining a display region according to the triggering location of the preset triggering signal, and displaying the virtual keyboard on the touchscreen, it may be solved that the user has to move the fingers thereof to touch the virtual keyboard displayed in the lower portion of the touchscreen due to limited range of finger movement in order to input information, whereby it is not convenient to move fingers back and forth and thus the inputting efficiency is lower; and it may realized that the virtual keyboard can be displayed in the display region on the touchscreen determined by the triggering signal, and the fingers may directly touch the virtual keyboard in display region without back-and-forth movement, thereby improving efficiency of inputting information.

As shown in Fig. 2A, it is a diagram showing a method for displaying a virtual keyboard according to another exemplary embodiment. The embodiment is illustrated by an example that the method for displaying a virtual keyboard is applied to a terminal. The method for displaying a virtual keyboard may include the following steps.

In step 201, a preset triggering signal is received.

A terminal receives a preset triggering signal triggered by a user. The triggering signal is used to trigger the display of the virtual keyboard. The preset triggering signal may be a signal triggered by clicking on an input box in an input interface with a finger, and may be a signal triggered by a long press on an unlock interface with a finger. If the preset triggering signal is the signal triggered by a click of a finger, a location on which the finger clicks is a triggering location of the preset triggering signal; and if the preset triggering signal is the signal triggered by a long press of a finger, a location on which the finger presses is the triggering location of the preset triggering signal.

In step 202, a display region is determined according to the triggering location of the preset triggering signal.

In this step, there are two manners in which the terminal displays the display region according to the triggering location of the preset triggering signal. A first manner is the case where the display region is a circular region, and a second manner is the case where the display region is an elliptic region.

The first manner is as shown in Fig. 2B, and in this case, this step includes the following sub-steps.

In step 202a, a preset radius R is obtained if the display region is a circular region.

The shape of the display region is preset by the terminal and may have any other shape in addition to the circular shape.

In step 202b, the circular region with the triggering location of the preset triggering signal as a center is determined according to the preset radius R.

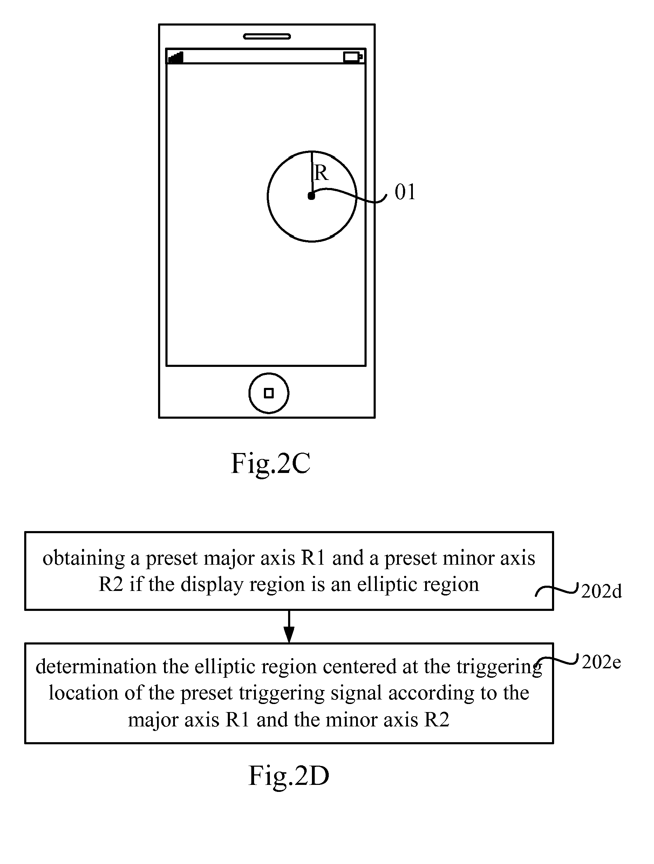

That is, the location and area of the circular display region depend on the triggering location and the preset radius R of the preset triggering signal, and the circular display region is determined with the triggering location of the preset triggering signal as a center and the preset radius R as a radius. For example, as shown in Fig. 2C, the circular region is formed with the triggering location 01 of the preset triggering signal as a center and the radius R.

The second manner is as shown in Fig. 2D, and in the case, this step includes the following sub-steps.

In sub-step 202d, a preset major axis R1 and a preset minor axis R2 are obtained if the display region is an elliptic region.

The shape of the display region is preset by the terminal and may have any other shape in addition to the elliptic shape.

In sub-step 202e, the elliptic region is determined with the triggering location of the preset triggering signal as a center according to the major axis R1 and the minor axis R2.

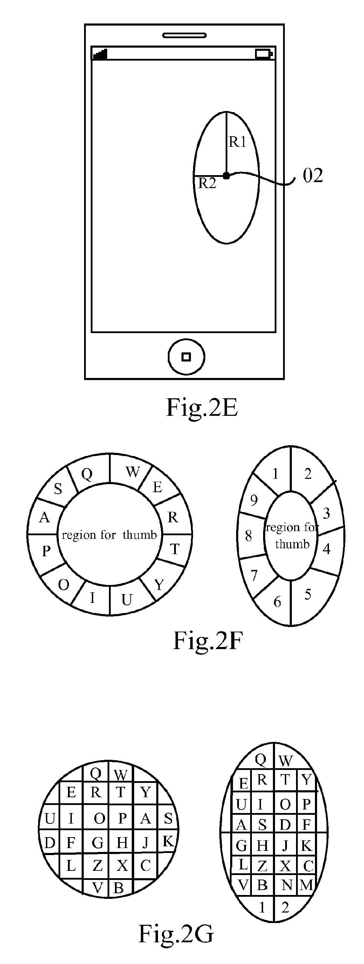

That is, the location and area of the elliptic display region depend on the triggering location and the major axis R1 and the minor axis R2 of the preset triggering signal, and the elliptic display region is determined with the triggering location of the preset triggering signal as a center and the major axis R1 and the minor axis R2. For example, as shown in Fig. 2E, the elliptic region is formed with the triggering location 02 of the preset triggering signal as a center and the major axis R1 and the minor axis R2.

In step 203, the virtual keyboard is displayed in the display region.

The terminal displays the virtual keyboard in the display region in a preset manner including, but not limited to, the following two cases.

### 1) Respective buttons of the virtual keyboard are uniformly arranged in the display region in a ring pattern.

That is, respective buttons of the virtual keyboard are arranged around the display region obtained in the step 202, for example as shown in Fig. 2F.

### 2) Respective buttons of the virtual keyboard are uniformly arranged in the display region in a tile pattern.

That is, respective buttons of the virtual keyboard are is filled into the display region obtained in step 202, for example as shown in Fig. 2G.

In step 204, a drag signal applied to the virtual keyboard is received.

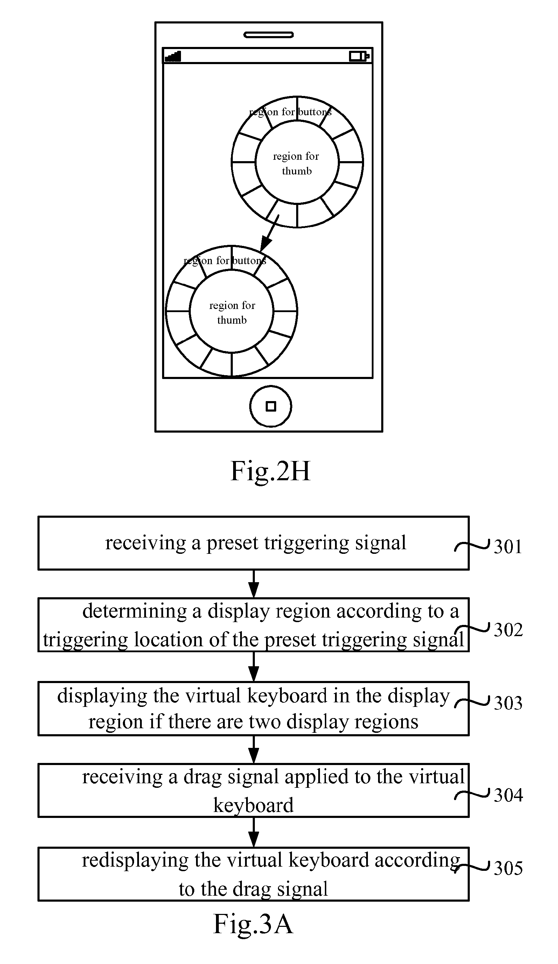

The user may apply the drag signal to the virtual keyboard so as to move the virtual keyboard to a desired location, when the current location of the virtual keyboard does not meet requirements of the user, for example, as shown in Fig. 2H.

In step 205, the virtual keyboard is redisplayed according to the drag signal, for example, as shown in Fig. 2H.

Accordingly, according to the method for displaying a virtual keyboard in the exemplary embodiment, through receiving the preset triggering signal for triggering the display of the virtual keyboard, determining the display region according to the triggering location of the preset triggering signal, and displaying the virtual keyboard on the touchscreen, it may be solved: the user has to move the fingers thereof to touch the virtual keyboard displayed on the lower portion of the touchscreen due to limited movement range of fingers so as to input information, whereby it is not convenient to move fingers back and forth and thus the inputting efficiency is lower; and the following advantages may realized: the virtual keyboard can be displayed in the display region on the touchscreen determined by the triggering signal, and the fingers may directly touch the virtual keyboard on display region without back-and-forth movement, thereby improving efficiency of inputting information.

It should be additionally pointed out that a user may customize the shape of the virtual keyboard as required by setting the display region as a circular shape or elliptic shape or other shapes and displaying buttons of the virtual keyboard in the set display region, thereby facilitating the user.

Additionally, it may allow a user to adjust the display location of the virtual keyboard at any time as required by receiving the drag signal applied to the virtual keyboard and re-displaying the virtual keyboard according to the drag signal.

Moreover, the terminal may be operated with one hand in accordance with the above method.

Referring to Fig. 3A, it is a flowchart showing a method for displaying a virtual keyboard according to an exemplary embodiment. The embodiment is illustrated by an example showing the method for displaying a virtual keyboard applied to a terminal. The method for displaying a virtual keyboard may include the following steps.

In step 301, a preset triggering signal is received.

The terminal receives a preset triggering signal triggered by a user. The triggering signal is used to trigger the display of the virtual keyboard. The preset triggering signal may be a signal triggered by clicking on an input box in an input interface with a finger, and may be a signal triggered by a long press on an unlock interface with a finger. In particular, the terminal receives two preset triggering signals triggered by a long press on touchscreen simultaneously with two fingers.

If the preset triggering signal is a signal triggered by a click of a finger, a location on which the finger clicks is a triggering location of the preset triggering signal; and if the preset triggering signal is a signal triggered by a long press of a finger, a location on which the finger presses is the triggering location of the preset triggering signal.

In step 302, a display region is determined according to the triggering location of the preset triggering signal.

In this step, the shape of the display region may be a circular shape, an elliptic shape, and other irregular shape. Hereinafter, two manners of determining the display region having a circular shape and an elliptic shape will be described, respectively.

A first manner is a case where the display is a circular region, and in this case, the step includes the following sub-steps.

1. A preset radius R is obtained if the display region is a circular region.

2. The circular region is determined with the triggering location of the preset triggering signal as a center according to the preset radius R.

A second manner is a case where the display is an elliptic region, and in this case, the step includes the following sub-steps.
1. A preset major axis R1 and a preset minor axis R2 are obtained if the display region is an elliptic region.
2. The elliptic region is determined with the triggering location of the preset triggering signal as a center according to the major axis R1 and the minor axis R2.

In this step, the manners of determining the circular display region and the elliptic display region are the same as those shown in Fig. 2A, which will be not repeated herein. However, it should be noted that there are two display regions determined according to the triggering locations of the preset triggering signals, which may be the same or different, since there are two preset triggering signals in the embodiment. Hereinafter, the embodiment will be described by an example of the same two display regions.

In step 303, the virtual keyboard is displayed in the display regions when there are two display regions.

If there are two display regions, the terminal displays the virtual keyboard in the display regions in such a manner that a part of the virtual keyboard is displayed in one of the two display regions in a preset manner and the other part of the virtual keyboard is displayed in the other of the two display regions in a preset manner.

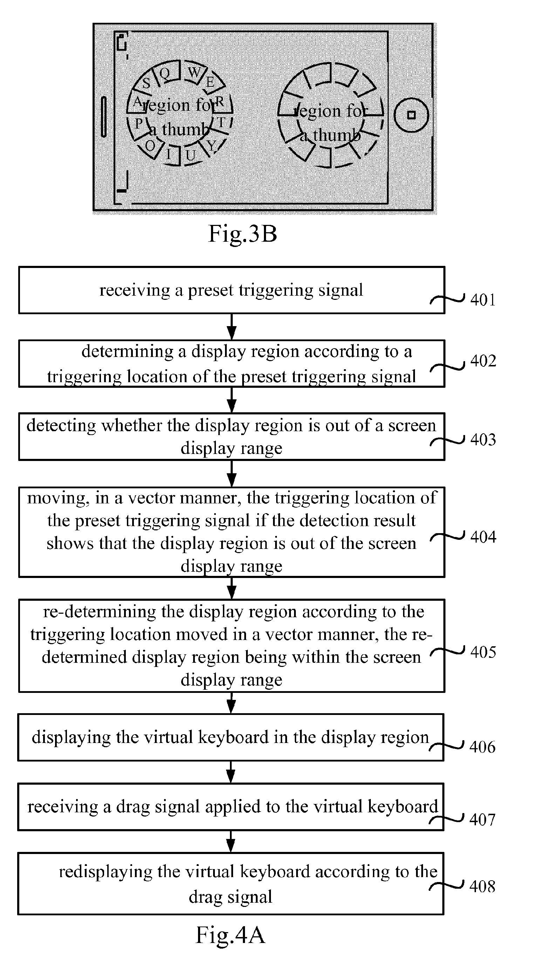

That is, not all buttons of the virtual keyboard are displayed in one of the two display regions. A part of the buttons are displayed on a display region at the left side and the other part of the buttons are displayed in a display region at the right side, thereby facilitating a left hand to control buttons at the left side and facilitating a right hand to control buttons at the right side. The display regions for respectively displaying the left part and the right part of the virtual keyboard may have a same shape or different shape, for example, as shown in Fig. 3B.

The terminal displays the virtual keyboard in the display region in a preset manner which includes, but not limited to, the following two cases.
1) Respective buttons of the virtual keyboard are uniformly arranged in the display region in a ring pattern.
2) Respective buttons of the virtual keyboard are uniformly arranged in the display region in a tile pattern.

In step 304, a drag signal applied to the virtual keyboard is received.

The user may apply a drag signal to the virtual keyboard to move the virtual keyboard to a desired location if the current location of the virtual does not meet requirements of the user.

In step 305, the virtual keyboard is redisplayed according to the drag signal.

According to the method for displaying a virtual keyboard in the exemplary embodiment, through receiving a preset triggering signal for triggering the display of the virtual keyboard, determining the display region according to the triggering location of the preset triggering signal, and displaying the virtual keyboard on the touchscreen, may be solved as follows: the user has to move the fingers thereof to touch the virtual keyboard displayed on the lower portion of the touchscreen due to limited movement range of fingers so as to input information, whereby it is not convenient to move fingers back and forth and thus the inputting efficiency is lower; and it may be realized that the virtual keyboard can be displayed in the display region on the touchscreen determined by the triggering signal, and the fingers may directly touch the virtual keyboard in the display region without back-and-forth movement, thereby improving efficiency of inputting information.

Additionally, it may allow the user to adjust the display location of the virtual keyboard at any time as required by receiving the drag signal applied to the virtual keyboard and re-displaying the virtual keyboard according to the drag signal.

It should be pointed out that when a user holds horizontally the electronic equipment with hands, the user's left and right hands may simultaneously operate together if two parts of the virtual keyboard is displayed on left and right sides, thereby improving speed of inputting information.

Moreover, the terminal may be operated with one hand in accordance with the above method.

Referring to Fig. 4A, it is a flowchart showing a method for displaying a virtual keyboard according to another exemplary embodiment. The embodiment is illustrated by an example that the method for displaying a virtual keyboard is applied to a terminal. The method for displaying a virtual keyboard may include the following steps.

In step 401, a preset triggering signal is received.

The terminal receives a preset triggering signal triggered by a user. The triggering signal is used to trigger the display of the virtual keyboard. The preset triggering signal may be a signal triggered by clicking on an input box in an input interface with a finger, and may be a signal triggered by a long press on an unlock interface with a finger.

If the preset triggering signal is a signal triggered by a click of a finger, a location on which the finger clicks is a triggering location of the preset triggering signal; and if the preset triggering signal is a signal triggered by a long press of a finger, a location on which the finger presses is the triggering location of the preset triggering signal.

In step 402, a display region is determined according to the triggering location of the preset triggering signal.

A first manner is a case where the display is a circular region, and in the case, the step includes the following sub-steps.
1. A preset radius R is obtained if the display region is a circular region.
2. The circular region is determined with the triggering location of the preset triggering signal as a center according to the preset radius R.

A second manner is a case where the display is an elliptic region, and in this case, the step includes the following sub-steps.
1. A preset major axis R1 and a preset minor axis R2 are obtained if the display region is an elliptic region.
2. The elliptic region is determined with the triggering location of the preset triggering signal as a center according to the major axis R1 and the minor axis R2.

In this step, the manners of determining the circular display region and the elliptic display region are the same as those shown in Fig. 2A, which will be not repeated herein.

In step 403, it is detected whether the display region is out of a screen display range.

If the detection result shows that the display region is out of the screen display range, the triggering location of the preset triggering signal is moved in a vector manner.

The terminal firstly computes a horizontal distance and/or a vertical distance between a location where the center point of the display region may be completely displayed and the triggering location of the preset triggering signal, then moves, in a vector manner, the triggering location of the preset triggering signal to the location where the center point of the display region may be completely displayed, according to the horizontal distance and/or the vertical distance.

For example, assuming the triggering location of the preset triggering signal is (x, y), if the horizontal distance between the location where the center point of the display region may be completely displayed and the triggering location of the preset triggering signal is set as x1, the triggering location of the preset triggering signal is moved in a vector manner to a location (x+x1, y); if the vertical distance between the location where the center point of the display region may be completely displayed and the triggering location of the preset triggering signal is set as y1, the triggering location of the preset triggering signal is moved in a vector manner to a location (x, y+y1); and if the horizontal distance and the vertical distance between the location where the center point of the display region may be completely displayed and the triggering location of the preset triggering signal are respectively set as x2 and y2, the triggering location of the preset triggering signal is moved in a vector manner to a location (x+x2, y+y2).

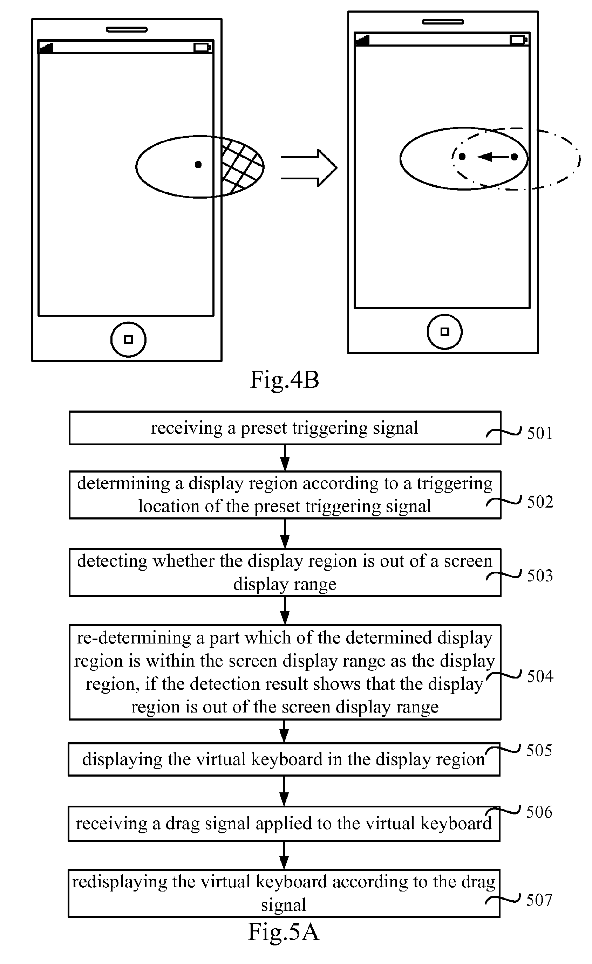

For example, as shown in Fig. 4B, a shadow part of the elliptic display region is out of the screen display region, i.e., the display region is out of the screen display region.

In step 405, a display region is re-determined according to the triggering location moved in the vector manner, and the re-determined display region is within the screen display region.

For example, as shown in Fig. 4B, after the triggering location of the triggering signal is moved in a vector manner, the re-determined display region is within the screen display region.

In step 406, the virtual keyboard is displayed in the display region.

In the embodiment, the terminal displays the virtual keyboard in the re-determined display region in a preset manner including, but not limited to, the following two cases.
1) Respective buttons of the virtual keyboard are uniformly arranged in the display region in a ring pattern.
2) Respective buttons of the virtual keyboard are uniformly arranged in the display region in a tile pattern.

It should be noted that if there are two display regions, when the virtual keyboard is displayed in the display region, a part of the virtual keyboard is displayed in one of the two display regions in a preset manner and the other part of the virtual keyboard is displayed in the other of the two display regions in the preset manner.

In step 407, a drag signal applied to the virtual keyboard is received.

The user may apply the drag signal to the virtual keyboard to move the virtual keyboard to a desired location if the current location of the virtual does not meet requirements of the user.

In step 408, the virtual keyboard is redisplayed according to the drag signal.

Accordingly, according to the method for displaying a virtual keyboard in the exemplary embodiment, through receiving the preset triggering signal for triggering the display of the virtual keyboard, determining the display region according to the triggering location of the preset triggering signal, and displaying the virtual keyboard on the touchscreen, it may be solved that the user has to move the fingers thereof to touch the virtual keyboard displayed on the lower portion of the touchscreen due to limited movement range of fingers in order to input information, whereby it is not convenient to move fingers back and forth and thus the inputting efficiency is lower; and it may realized that the virtual keyboard can be displayed in the display region on the touchscreen determined by the triggering signal, and the fingers may directly touch the virtual keyboard in display region without back-and-forth movement, whereby improving efficiency of inputting information.

Additionally, it may allow the user to adjust the display location of the virtual keyboard at any time as required by receiving the drag signal applied to the virtual keyboard and re-displaying the virtual keyboard according to the drag signal.

It should be additionally pointed out that it is detected whether the display region is out of the screen display region; if the display region is out of the screen display region, the triggering location of the preset triggering signal is moved in a vector manner, then a display region is re-determined according to the triggering location moved in the vector manner such that the re-determined display region is within the screen display region, and then the virtual keyboard is displayed in the display region, whereby the display region being able to display the virtual keyboard can be re-determined by moving the triggering location of the preset triggering signal, when the triggering location of the preset triggering signal is closer to an edge of the screen and the display region displayed on the screen is too small to display the virtual keyboard.

Moreover, the terminal may be operated with one hand in accordance with the above method.

As shown in Fig. 5A, it is a flowchart showing a method for displaying a virtual keyboard according to another exemplary embodiment. The embodiment is illustrated by an example that the method for displaying a virtual keyboard is applied to a terminal. The method for displaying a virtual keyboard may include the following steps.

In step 501, a preset triggering signal is received.

The terminal receives the preset triggering signal triggered by a user. The triggering signal is used to trigger the display of the virtual keyboard. The triggering signal may be a signal triggered by clicking on an input box in an input interface with a finger, and may be a signal triggered by a long press on an unlock interface with a finger.

If the preset triggering signal is a signal triggered by a click of a finger, a location on which the finger clicks is a triggering location of the preset triggering signal; and if the preset triggering signal is a signal triggered by the long press of a finger, a location on which the finger presses is the triggering location of the preset triggering signal.

In step 502, a display region is determined according to the triggering location of the preset triggering signal.

A first manner is a case where the display is a circular region, and in this case, this step includes the following sub-steps.
1. A preset radius R is obtained if the display region is a circular region.
2. The circular region is determined with the triggering location of the preset triggering signal as a center according to the preset radius R.

A second manner is a case where the display is an elliptic region, and in this case, the step includes the following sub-steps.
1. A preset major axis R1 and a preset minor axis R2 are obtained if the display region is an elliptic region.
2. The elliptic region is determined with the triggering location of the preset triggering signal as a center according to the major axis R1 and the minor axis R2.

In this step, the manners of determining the circular display region and the elliptic display region are the same as those shown in Fig. 2A, which will be not repeated herein.

In step 503, it is detected whether the display region is out of a screen display range.

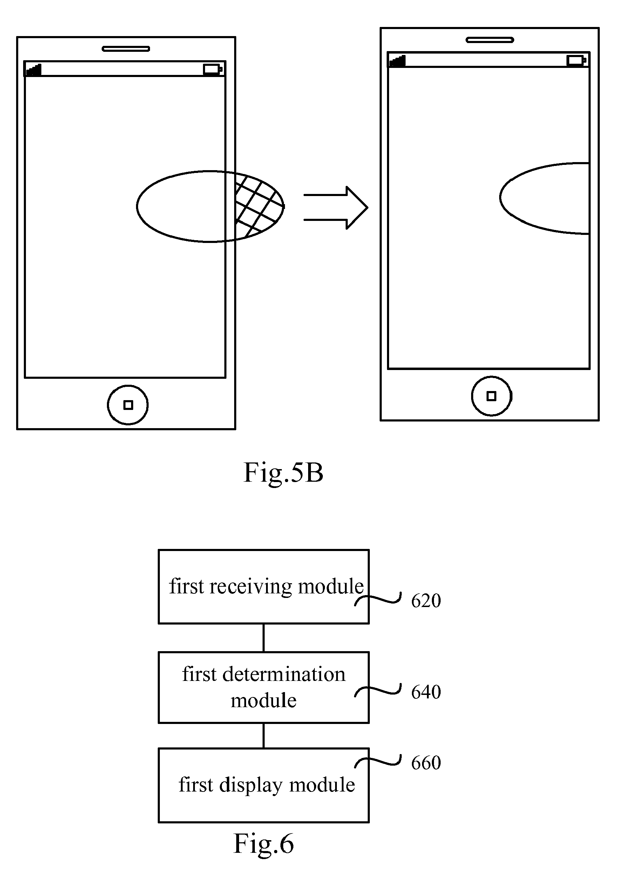

For example, as shown in Fig. 5B, a shadow part of the display region is out of the screen display region, i.e., the display region is out of the screen display region.

In step 504, if the detection result shows that the display region is out of the screen display range, a part which of the determined display region is within the screen display region is re-determined as the display region.

That is, a part which of the determined display region is out of the screen display region is removed; and the part which of the determined display region is within the screen display region is re-determined as the display region.

For example, as shown in Fig. 5B, the shadow part of the elliptic display region which is out of the screen display region is removed, and the part of the elliptic display region which is within the screen display region is re-determined as a display region.

In step 505, the virtual keyboard is displayed in the display region.

In the embodiment, the terminal displays the virtual keyboard in the display region in a preset manner including, but not limited to, the following two cases.
1) Respective buttons of the virtual keyboard are uniformly arranged in the display region in a ring pattern.
2) Respective buttons of the virtual keyboard are uniformly arranged in the display region in a tile pattern; and

In the embodiment, respective buttons of the virtual keyboard are uniformly arranged in the tile pattern in the re-determined display region. In other words, the re-determined display region is filled with respective buttons of the virtual keyboard.

It should be additionally pointed out that if there are two display regions, when the virtual keyboard is displayed in the display region, a part of the virtual keyboard is displayed in one of the two display regions in a preset manner and the other part of the virtual keyboard is displayed in the other of the two display regions in the preset manner,.

In step 506, a drag signal applied to the virtual keyboard is received.

The user may apply the drag signal to the virtual keyboard to move the virtual keyboard to a desired location if the current location of the virtual does not meet requirements of the user.

In step 507, the virtual keyboard is redisplayed according to the drag signal.

In conclusion, according to the method for displaying a virtual keyboard in the exemplary embodiment, through receiving the preset triggering signal for triggering the display of the virtual keyboard, determining the display region according to the triggering location of the preset triggering signal, and displaying the virtual keyboard on the touchscreen, it may be solved that the user has to move the fingers thereof to touch the virtual keyboard displayed on the lower portion of the touchscreen due to limited movement range of fingers in order to input information, whereby it is not convenient to move fingers back and forth and thus the inputting efficiency is lower; and it may realized that the virtual keyboard can be displayed in the display region on the touchscreen determined by the triggering signal, and the fingers may directly touch the virtual keyboard on display region without back-and-forth movement, thereby improving efficiency of inputting information.

Additionally, it may allow the user to adjust the display location of the virtual keyboard at any time as required by receiving the drag signal applied to the virtual keyboard and re-displaying the virtual keyboard according to the drag signal.

It should be additionally pointed out that it is detected whether the display region is out of the screen display region; if the display region is out of the screen display region, and the part which of the determined display region is within the screen display region is re-determined as a display region, and then the virtual keyboard is displayed in the re-determined display region such that when a part of the display region determined by the triggering location of the triggering signal is out of the screen display region, the other part which of the display region is within the screen display region can be re-determined as a display region, whereby the virtual keyboard can be displayed in the re-determined display region.

Moreover, the terminal may be operated with one hand in accordance with the above method.

Hereinafter, the embodiments of the device of the present disclosure will be described, and the details which are not described in detail may refer to the description of the above corresponding embodiments of the method.

Referring to Fig. 6, it is a block diagram illustrating a device for displaying a virtual keyboard according to an exemplary embodiment. The device for displaying a virtual keyboard may be implemented as a whole or a part of a terminal by software, hardware or combination thereof. The device for displaying a virtual keyboard may include a first receiving module 620, a first determination module 640 and a first display module 660.

The first receiving module 620 is configured to receive a preset triggering signal for triggering a virtual keyboard.

The first determination module 640 is configured to determine a display region according to a triggering location of the preset triggering signal received by the first receiving module 620.

The first display module 660 is configured to display a virtual keyboard in the display region determined by the first determination module 640.

In conclusion, according to the device for displaying a virtual keyboard in the exemplary embodiment, through receiving the preset triggering signal for triggering the virtual keyboard, determining the display region according to the triggering location of the preset triggering signal, and displaying the virtual keyboard on the touchscreen, it may be solved that the user has to move the fingers thereof to touch the virtual keyboard displayed on the lower portion of the touchscreen due to limited movement range of fingers in order to input information, whereby it is not convenient to move fingers back and forth and thus the inputting efficiency is lower; and it may realized that the virtual keyboard can be displayed in the display region of the touchscreen determined by the triggering signal, and the fingers may directly touch the virtual keyboard on display region without back-and-forth movement, thereby improving efficiency of inputting information.

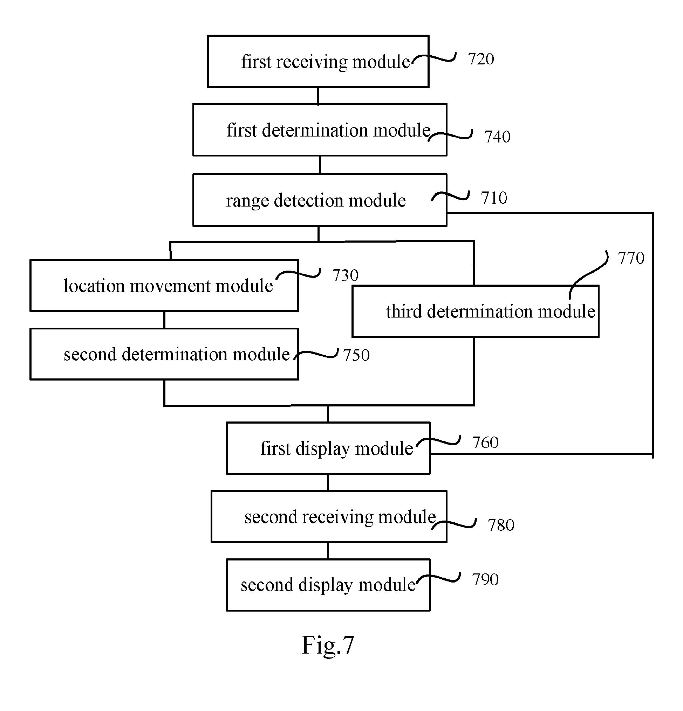

Referring to Fig. 7, it is a block diagram illustrating a device for displaying a virtual keyboard according to an exemplary embodiment. The device for displaying a virtual keyboard may be implemented as a whole or a part of a terminal by software, hardware or combination thereof. The device for displaying a virtual keyboard may include a first receiving module 720, a first determination module 740 and a first display module 760.

The first receiving module 720 is configured to receive a preset triggering signal for triggering a virtual keyboard.

The first determination module 740 is configured to determine a display region according to a triggering location of the preset triggering signal received by the first receiving module 720.

The first display module 760 is configured to display a virtual keyboard in the display region determined by the first determination module 740.

Alternatively, the first determination module 740 may include a first determination sub-module and a second determination sub-module.

The first determination sub-module is configured to obtain a preset radius R if the display region is a circular region, and to determine the circular region centered at the triggering location of the preset triggering signal according to the preset radius R.

The second determination sub-module is configured to obtain a preset major axis R1 and a preset minor axis R2 if the display region is an elliptic region, and to determine the elliptic region centered at the triggering location of the preset triggering signal according to the major axis R1 and the minor axis R2.

Alternatively, the first display module 760 is configured to display the virtual keyboard in the display region in a preset manner including, but not limited to, the following manners:

Respective buttons of the virtual keyboard are uniformly arranged in the display region in a ring pattern; or

Respective buttons of the virtual keyboard are uniformly arranged in the display region in a tile pattern.

Alternatively, if there are two display regions, the first display module 760 is configured to display a part of the virtual keyboard in one of the two display regions in a preset manner and to display the other part of the virtual keyboard on the other of the two display regions in the preset manner. The preset manner may include.

Respective buttons of the virtual keyboard are uniformly arranged in the display region in a ring pattern; or

Respective buttons of the virtual keyboard are uniformly arranged in the display region in a tile pattern.

Alternatively, the device for displaying a virtual keyboard may further include a range detection module 710, a location movement module 730 and a second determination module 750.

The range detection module 710 is configured to detect whether the display region is out of a screen display range.

The location movement module 730 is configured to move, in a vector manner, the triggering location of the preset triggering signal if the detection result shows that the display region is out of the screen display range.

The second determination module 750 is configured to re-determine the display region according to the triggering location moved in the vector manner, the re-determined display region being within the screen display region,.

Alternatively, the device for displaying a virtual keyboard may further include a range detection module 710 and a third determination module 770.

The range detection module 710 is configured to detect whether the display region is out of a screen display range.

The third determination module 770 is configured to re-determine a part which of the determined display region is within the screen display region as a display region, if the detection result shows that the display region is out of the screen display range.

Alternatively, the device for displaying a virtual keyboard may further include a second receiving module 780 and a second display module 790.

The second receiving module 780 is configured to receive a drag signal applied to the virtual keyboard.

The second display module 790 is configured to re-display the virtual keyboard according to the drag signal received by the second receiving module 780.

In conclusion, according to the device for displaying a virtual keyboard in the exemplary embodiment, through receiving the preset triggering signal for triggering the display of the virtual keyboard, determining the display region according to the triggering location of the preset triggering signal, and displaying the virtual keyboard on the touchscreen, it may be solved that the user has to move the fingers thereof to touch the virtual keyboard displayed on the lower portion of the touchscreen due to limited movement range of fingers in order to input information, whereby it is not convenient to move fingers back and forth and the inputting efficiency is lower; and it may realized that the virtual keyboard can be displayed in the display region on the touchscreen determined by the triggering signal, and the fingers may directly touch the virtual keyboard on display region without back-and-forth movement, thereby improving efficiency of inputting information.

Additionally, it may allow the user to adjust the display location of the virtual keyboard at any time as required that the drag signal applied to the virtual keyboard is received and the virtual keyboard is redisplayed according to the drag signal.

It should be additionally pointed out that when the user holds horizontally the electronic equipment with hands, the user's left and right hands may simultaneously operate together by simultaneously displaying two parts of the virtual keyboard on left and right sides, thereby improving speed of inputting information.

It should be additionally pointed out that it is detected whether the display region is out of the screen display region; if the display region is out of the screen display region, the triggering location of the preset triggering signal is moved in a vector manner, then a display region is re-determined according to the triggering location moved in the vector manner such that the re-determined display region is within the screen display region, and then the virtual keyboard is displayed in the display region, whereby the display region being able to display the virtual keyboard can be re-determined by moving the triggering location of the preset triggering signal, when the triggering location of the preset triggering signal is closer to an edge of the screen and the display region displayed in the screen is too small to display the virtual keyboard.

It should be additionally pointed out that it is detected whether the display region is out of the screen display region; if the display region is out of the screen display region, and the part, which is in the screen display region, of the determined display region is re-determined as a display region, and then the virtual keyboard is displayed in the re-determined display region, whereby when a part of the display region determined by the triggering location of the triggering signal is out of the screen display region, a part of the display region which is within the screen display region can be re-determined as a display region, and thus the virtual keyboard can be displayed in the re-determined display region.

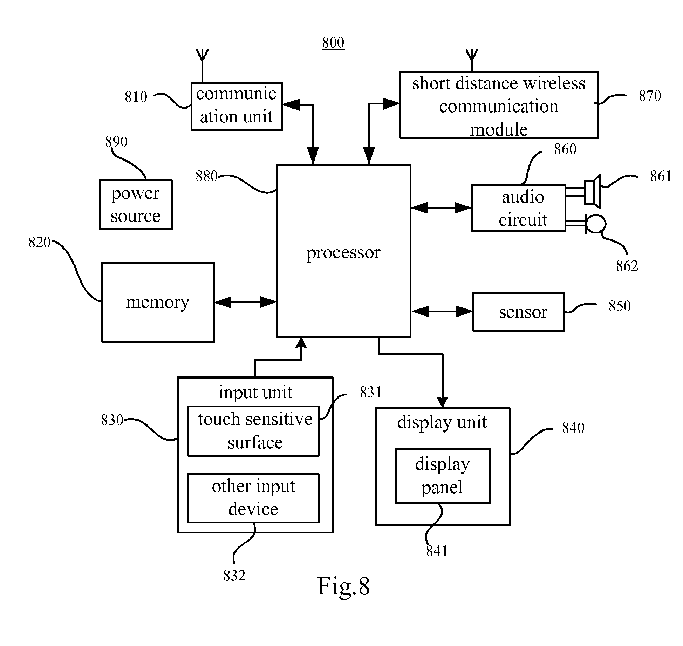

Referring to Fig. 8, it is a block diagram illustrating a terminal according to an exemplary embodiment of the present disclosure. The terminal is used to perform the method for displaying a virtual keyboard described in the above embodiments.

The terminal 800 may include: a communication unit 810, a memory 820 including one or more computer readable storage media, an input unit 830, a display unit 840, a sensor 850, an audio circuit 860, a short distance wireless communication module 870, a processor 880 including one or more process cores, and a power source 890 and the like. Those skills of the present art may understand that the structure of the terminal as shown in Fig. 8 is not restrictive to the terminal, and it may comprise more or less components than those in the figures, or a combination of some components, or different component arrangements.

The communication unit 810 is configured to transmit or receive information during the transmission and reception of information or a process of calling. Particularly, the downlink information from the base station is received and then is transmitted to the one or more processors to be processed. In addition, the communication unit 810 transmits uplink data to the base station. In general, the communication unit 810 includes, but not limited to, an antenna, at least one amplifier, a tuner, one or more oscillator, a SIM card, a transceiver, a coupler, a Low Noise Amplifier (LNA), a duplexer and the like. The communication unit 810 may be in contact with other devices via a wireless communication and a network. The communication unit 810 may adopt any one communication standard or protocol including, but not limited to, Global System of Mobile communication (GSM), General Packet Radio Service (GPRS), Code Division Multiple Access (CDMA), Wideband Code Division Multiple Access (WCDMA), Long Term Evolution (LTE), E-mail, Short Messaging Service (SMS) and the like. The memory 820 may be configured to store software programs and modules. For example, the memory 820 may be configured to store a program for collecting voice signals, a program for identifying key words, a program for realizing continuous speech recognition, a program for setting a reminder, and the like. The processor 880 may perform various functions and data processing by operating programs and modules stored in the memory 820, for example, a function of "receiving a preset triggering signal", a function of "determining a display region according to a triggering location of the triggering signal", a function of "displaying a virtual keyboard on the display" and the like. The memory 820 may mainly include a program storage area and a data storage area. The program storage area may store an operation system, applications required by at least one required function (such as voice play function, image play function and the like), and the data storage area may store data (such as video data, phonebook data, and the like) created by the use of the terminal 800. Besides, the memory 820 may include a high speed random access memory, or further include a non-volatile memory, such as at least a magnetic disk storage device, a flash memory, or other volatile solid-state storage devices. Correspondingly, the memory 820 may further comprise a memory controller to provide accesses from the processor 820 and the input unit 830 to the memory 820.

The input unit 830 may be configured to receive inputted numerical information or character information, and to generate signal inputs through a keypad, a keypad, a mouse, an operation rod, optical or trackball related to user settings and function control. Optionally, the input unit 830 may include a touch-sensitive surface 131 and other input device 132. The touch-sensitive surface 131, also known as a touch screen or a touch pad, may collect touch action performed thereon or around by the user (such as an action performed on the touch-sensitive 131 or around by the user using any suitable object such as a finger or a touch pen), and drive corresponding connection device according to a preset program. Alternatively, the touch-sensitive surface 831 may include two parts, i.e., a touch detecting device and a touch controller. The touch detecting device detects a location touched by the user and a signal generated from the touch action, and transmits the signal to the touch controller. The touch controller receives touch information from the touch detecting device and converts it into the touch point coordinates, and then transmits the coordinates to the processor 880 and receives and performs instructions from the processor 180. Additionally, the touch-sensitive surface 831 may be realized as various types of touch-sensitive surface, such as a resistive touch-sensitive surface, a capacitive touch-sensitive surface, an infrared touch-sensitive surface and a surface acoustic wave touch-sensitive surface and the like. In addition to the touch-sensitive surface 831, the input unit 830 may further include other input device 832. Optionally, the other input device 832 may include, but not limited to, one or more of a physical keyboard, function buttons (such as a volume control button, a switch button and the like), a trackball, a mouse, a joystick.

The display unit 840 may be configured to display various kinds of graphic user interfaces of inputting information by the user or provided to the user or the terminal 800. These graphic user interfaces may be made up of graphics, texts, icons, videos and any other combination thereof. The display unit 840 may include a display panel 841; optionally, LCD (Liquid Crystal Display), OLED (Organic Light-Emitting Diode) or the like may be used to assemble the display panel 841. Furthermore, the touch sensitive surface 831 may be configured to cover the display panel 141. When the touch operation performed on or near the touch sensitive surface 831 is detected, the touch sensitive surface 831 may transmit signals to the processor 880 to determine the type of the touch event, then the processor 880 may provide a corresponding visual output on the display panel 841 according to the type of the touch event. In Figure 8, although the touch sensitive surface 831 and the display panel 841 are served as two independent components to realize the input and output functions, they can be integrated together in some embodiments to realize the input and output functions.

The terminal 800 may further include at least one sensor 850 such as a photo sensor, a movement sensor and other sensors. For example, the photo sensor may include an ambient light sensor and a proximity sensor. The ambient light sensor may adjust brightness of the display panel 841 according to intensity of the ambient light. The proximity sensor may close the display panel and/or backlight when the terminal 800 is close to the user's ear. As one type of movement sensors, a gravitational acceleration sensor may detect values of accelerations in various directions (usually three axes), and may detect a value and a direction of the gravitation when resting, and may be used in an application for identifying a mobile phone pose (such as switching between a landscape mode and a vertical mode, corresponding games, pose adjusting with a magnetometer), functions related to vibration (such as a pedometer, knocking) and the like. Other sensors such as a gyroscope, a barometer, a humid meter, a thermometer, an infrared sensor and the like which may be arranged in the terminal 800 will not be described in detailed.

The audio circuit 860, a speaker 861, a microphone 862 may provide an audio interface between the user and the terminal 800. The audio circuit 860 may convert the received audio data into electronic signals and transmit the electronic signals to the speaker 861, and the speaker 861 may convert the electronic signals into voice and output the voice. Additionally, the microphone 862 may convert the collected voice signals into electronic signals; the audio circuit 860 receives the electronic signals and converts them into audio data; and the audio data is transmitted to the processor 880 and then is transmitted to another terminal device via the communication unit 810 after processed by the processor; or the audio data is transmitted to the memory 820 to be further processed. The audio circuit 860 may further include an earplug jack to allow communication between a peripheral earphone and the terminal 800.

The wireless communication 870 may be a Wireless Fidelity (WIFI) module or a Bluetooth module. The terminal 800 may help the user transmit or receive E-mail, browse web pages and access streaming media and the like through the wireless communication unit 870, which provides the user the wireless broadband internet access. Although the wireless communication unit 870 is shown in the drawings, it should be understood that the wireless communication unit 870 is not a necessary component for the terminal 800, and may be omitted according to requirements. The processor 880 is a control center of the terminal 800, and uses various interfaces and wires to connect respective portions of the whole client computer. By running or executing software programs and/or modules stored in the memory 820, calling data stored in the memory 820, and executing various functions of the terminal 800 and processing data, the processor 880 proceeds overall monitoring to the mobile terminal. Optionally, the processor 880 may include one or more processing cores. Optionally, the processor 880 may integrate application processors and modem processors, wherein the application processors may mainly process the operation systems, the user interfaces, the application programs and the like, and the modem processors may mainly process wireless communications. It should be understood that the above modem may not be integrated into the processor 880.

The terminal 800 may further include the power supply 890 (for example, a battery) to supply power to respective component. Optionally, the power supply may be logically connected with the processor 880 through a power supply management system, thereby realizing functions of managing charging, discharging, power consumption, and the like, through the power supply management system. The power supply 890 may further include arbitrary components such as one or more DC or AC power supplies, a rechargeable system, a power supply malfunction detection circuit, a power supply converter or an inverter, a power supply state indicator and the like.

Although not shown, the terminal 800 may further include a camera, a Bluetooth module, which will not be described in detail.

The terminal further includes a processor and one or more programs stored in the memory, wherein the one or more programs are configured to be executed by one or more processors, and include instructions for performing the following operations.

The person skilled in the art should appreciate that a part or all of steps described in the above embodiments may be realized through hardware, or through a hardware instructed by a program which may be stored in a computer readable storage medium. The storage medium may be a ROM, a magnetic disk or a disk.

## Claims

**1.** A method for displaying a virtual keyboard, **characterized in that**, the method comprises:
receiving a preset triggering signal (102, 201, 301, 401, 501) for triggering the display of the virtual keyboard;
determining a display region according to a triggering location of the preset triggering signal (104, 402, 202, 502); and
displaying the virtual keyboard in the display region (106, 203, 406, 505).

**2.** The method according to claim 1, wherein the determining a display region according to a triggering location of the preset triggering signal (202) comprises:
obtaining a preset radius R if the display region is a circular region (202a); and determining the circular region centered at the triggering location of the preset triggering signal according to the preset radius R (202b); or
obtaining a preset major axis R1 and a preset minor axis R2 if the display region is an elliptic region (202d); and determining the elliptic region centered at the triggering location of the preset triggering signal according to the major axis R1 and the minor axis R2 (202e).

**3.** The method according to claim 1, wherein the displaying the virtual keyboard in the display region comprises (106, 203, 406, 505):
displaying the virtual keyboard in the display region in a preset manner which comprises:
uniformly arranging respective buttons of the virtual keyboard in the display region in a ring pattern; or
uniformly arranging respective buttons of the virtual keyboard in the display region in a tile pattern.

**4.** The method according to claim 1, wherein if there are two display regions, the displaying the virtual keyboard in the display region (106, 203, 406, 505) comprises:
displaying a part of the virtual keyboard in one of the two display regions in a preset manner and the other part of the virtual keyboard in the other of the two display regions in the preset manner, wherein the preset manner comprises:
uniformly arranging respective buttons of the virtual keyboard in the display region in a ring pattern; or
uniformly arranging respective buttons of the virtual keyboard in the display region in a tile pattern.

**5.** The method according to any one of claims 1-4, wherein the method further comprises:
detecting whether the display region is out of a screen display range (403);
moving the triggering location of the preset triggering signal in a vector manner if the detection result shows that the display region is out of the screen display range (404); and
re-determining the display region according to the triggering location moved in the vector manner, the re-determined display region being within the screen display range (405).

**6.** The method according to any one of claims 1-4, wherein the method further comprises:
detecting whether the display region is out of a screen display range (503); and
re-determining a part of the determined display region which is within the screen display range as the display region if the detection result shows that the display region is out of the screen display range (504).

**7.** The method according to any one of claims 1-4, wherein the method further comprises:
receiving a drag signal applied to the virtual keyboard (407 ,506); and
re-displaying the virtual keyboard according to the drag signal (408, 507).

**8.** A device for displaying a virtual keyboard, **characterized in that**, the device comprises:
a first receiving module (720, 620) configured to receive a preset triggering signal for triggering a virtual keyboard (102, 201, 301, 401, 501);
a first determination module (640, 740) configured to determine a display region according to a triggering location of the preset triggering signal (104, 402, 202, 502); and
a first display module (760, 660) configured to display the virtual keyboard in the display region (106, 203, 406, 505).

**9.** The device according to claim 8, wherein the first determination module (740) comprises:
a first determination sub-module configured to obtain a preset radius R if the display region is a circle region (202a), and to determine the circular region centered at the triggering location of the preset triggering signal according to the preset radius R (202b);
and
a second determination sub-module configured to obtain a preset major axis R1 and a preset minor axis R2 if the display region is an elliptic region (202d), and to determine the elliptic region centered at the triggering location of the preset triggering signal according to the major axis R1 and the minor axis R2 (202e).

**10.** The device according to claim 8, wherein the first display module (660, 760) is configured to display the virtual keyboard in the display region in a preset manner which comprises:
uniformly arranging respective buttons of the virtual keyboard in the display region in a ring pattern; or
uniformly arranging respective buttons of the virtual keyboard in the display region in a tile pattern.

**11.** The device according to claim 8, wherein if there are two display regions,
the first display module (660, 760) is configured to display a part of the virtual keyboard in one of the two display regions in a preset manner and to display the other part of the virtual keyboard in the other display region in the preset manner, wherein the preset manner comprises:
uniformly arranging respective buttons of the virtual keyboard in the display region in a ring pattern; or
uniformly arranging respective buttons of the virtual keyboard in the display region in a tile pattern.

**12.** The device according to any one of claims 8-11, wherein the device further comprises:
a range detection module (710) configured to detect whether the display region is out of a screen display range (403);
a location movement module (730) configured to move the triggering location of the preset triggering signal in a vector manner if the detection result shows that the display region is out of the screen display range (404); and
a second determination module (750) configured to re-determine the display region according to the triggering location moved in the vector manner, the re-determined display region being within the screen display range (405).

**13.** The device according to any one of claims 8-11, wherein the device further comprises:
a range detection module (710) configured to detect whether the display region is out of a screen display range (503); and
a third determination module (770) configured to re-determine a part of the determined display region which is within the screen display range as the display region, if the detection result shows that the display region is out of the screen display range (504).

**14.** The device according to any one of claims 8-11, wherein the device further comprises:
a second receiving module (780) configured to receive a drag signal applied to the virtual keyboard (407, 506); and
a second display module (790) configured to re-display the virtual keyboard according to the drag signal (408, 507).

**16.** A terminal (800), **characterized in that**, the terminal (800) comprises:
one or more processors (880);
a memory (820); and
one or more modules stored in the memory and configured to be executable by the one or more processors, and comprising the following functions of:
receiving a preset triggering signal for triggering the display of the virtual keyboard (102, 201, 301, 401, 501);
determining a display region according to a triggering location of the preset triggering signal (104, 402, 202, 502); and
displaying the virtual keyboard in the display region (106, 203, 406, 505).

**17.** A non-transitory readable storage medium including instructions executable by one or more processors (880) in a terminal (800) and for causing the one or more processors to:
receive a preset triggering signal for triggering the display of the virtual keyboard (102, 201,301,401,501);
determine a display region according to a triggering location of the preset triggering signal (104, 402, 202, 502); and
display the virtual keyboard in the display region (106, 203, 406, 505).

**18.** A computer program, which when executing on a processor (880), performs a method according to any of the claims 1 to 7.
